# EUROPÄISCHE PATENTSCHRIFT

(11) **EP 3 563 207 B1**
(45) Veröffentlichungstag und Bekanntmachung des Hinweises auf die Patenterteilung: **07.10.2020**
(21) Anmeldenummer: 17804801.3
(22) Anmeldetag: 15.11.2017
(51) Int. Cl.: F16K 11/22, F16K 31/365, F16K 37/00, G05D 7/00, F24D 19/10

(54) **REGELARMATUR ZUR REGELUNG DES DIFFERENZDRUCKES UND/ODER DES VOLUMENSTROMES**
CONTROL VALVE FOR REGULATION OF DIFFERENTIAL PRESSURE AND/OR FLOW
VANNE DE RÉGULATION DE LA PRESSION DIFFÉRENTIELLE ET/OU DU DÉBIT

(30) Priorität: 27.12.2016 DE 102016125734
(43) Veröffentlichungstag der Anmeldung: 06.11.2019
(73) Patentinhaber: Oventrop GmbH & Co. KG, 59939 Olsberg (DE)
(72) Erfinder: BRAMBRING, Stefan, 59939 Olsberg (DE)
(74) Vertreter: Köchling, Conrad-Joachim
(86) Internationale Anmeldenummer: PCT/DE2017/100967
(87) Internationale Veröffentlichungsnummer: WO 2018/121811

(56) Entgegenhaltungen:
- WO-A1-2006/031161
- WO-A1-2009/127173
- DE-A1-102004 023 077
- DE-A1-102014 110 550

## Beschreibung

Die Erfindung betrifft eine Regelarmatur zur Regelung des Differenzdruckes und/oder zur Regelung und Regulierung des Volumenstromes eines mit Flüssigkeit betriebenen Strömungskreises, wobei die Regelarmatur ein Gehäuse aufweist mit einem ersten Zulaufstutzen, durch den der Volumenstrom des Strömungskreises ganz oder teilweise fließt oder abgesperrt ist, mit einem Ablaufstutzen über den der gesamte Volumenstrom des Strömungskreises abgeführt ist und mit einem zwischen dem ersten Zulaufstutzen und dem Ablaufstutzen angeordneten vom gesamten Volumenstrom durchströmten Anschlussstutzen, in den ein aus einer Regulier- und Regeleinrichtung gebildeter Einsatz integriert ist, wobei die Reguliereinrichtung aus einer dem ersten Zulaufstutzen zugeordneten ersten Durchflussreguliereinrichtung und einer zugeordneten zweiten Durchflussreguliereinrichtung besteht, wobei die Regeleinrichtung den Differenzdruck über die erste Durchflussreguliereinrichtung und damit den Volumenstrom, der dem ersten Zulaufstutzen zugeführt ist, konstant hält und/oder die Regeleinrichtung den Differenzdruck über die zweite Durchflussreguliereinrichtung einschließlich der ihr stromaufwärts vorgelagerten Armaturen mit regulierbaren Strömungswiderständen und/oder Wärmeabgabevorrichtungen konstant hält und wobei der Anschlussstutzen oder daran angeordnete Teile eine Anschlussgeometrie für einen Stellantrieb aufweist, mit dem die erste Durchflussreguliereinrichtung und die zweite Durchflussreguliereinrichtung der Regulier- und Regeleinrichtung einstellbar ist, wobei eine im Anschlussstutzen der Regelarmatur axial verschiebbar angeordnete Spindel einen aus dem Anschlussstutzen vorragenden, vom Stellantrieb betätigten ersten Endbereich und mindestens ein an der Spindel befestigtes erstes Drosselelement aufweist, welches Bestandteil der ersten Durchflussreguliereinrichtung ist, und mindestens ein zweites Drosselelement aufweist, welches Bestandteil der zweiten Durchflussreguliereinrichtung ist und wobei ein Abschnitt der Spindel zwischen dem ersten Endbereich und dem ersten Drosselelement als axiale Führung für einen beweglichen Drosselkörper der Regeleinrichtung vorgesehen ist.

Dabei ist der gesamte Volumenstrom durch die Regelarmatur durch einen Abschnitt des Strömungskreises geleitet, der, von einem Verzweigungspunkt ausgehend, aus einem ersten und zweiten Strang gebildet ist, wobei je nach Stellung der ersten und zweiten Durchflussreguliereinrichtung der Volumenstrom des Strömungskreises in zwei Teilvolumenströme durch den ersten und zweiten Strang geleitet oder der gesamte Volumenstrom entweder nur durch den ersten oder nur durch den zweiten Strang geleitet ist, wobei der gesamte Volumenstrom oder ein Teilvolumenstrom im ersten Strang über Armaturen und/oder Wärmeabgabevorrichtungen dem ersten Zulaufstutzen und der Volumenstrom oder ein Teilvolumenstrom im zweiten Strang über Armaturen und/oder Wärmeabgabevorrichtungen dem zweiten Zulaufstutzen der Regelarmatur zugeführt ist und wobei in Strömungsrichtung hinter den Durchflussreguliereinrichtungen die Teilvolumenströme in dem Anschlussstutzen noch vor der Regeleinrichtung innerhalb der Regelarmatur wieder zusammengeführt sind.

Eine solche Regelarmatur ist aus der DE 10 2014 110 550 A1 bekannt.

Solche Regelarmaturen werden z.B. in einem ersten Strömungskreis eingesetzt, in dem über eine erste Wärmeabgabevorrichtung ein weiteres Medium eines an der ersten Wärmeabgabevorrichtung angeschlossenen separaten zweiten Strömungskreises z.B. Trinkwasserkreis aufgeheizt wird und/oder in dem über eine zweite Wärmeabgabevorrichtung ein weiteres Medium z.B. Raumluft erwärmt wird. So ist z.B. für die Erwärmung des Mediums im separaten zweiten Strömungskreis (Trinkwasserkreis) die erste Wärmeabgabevorrichtung im ersten Strang des ersten Strömungskreises durch einen Plattenwärmeübertrager und zur Raumlufterwärmung die zweite Wärmeabgabevorrichtung im zweiten Strang des ersten Strömungskreises durch einen Heizkörper oder eine Flächenheizungen gebildet. Vorrangig soll das Heizwasser im ersten Strömungskreis über die erste Wärmeabgabevorrichtung (Plattenwärmeübertrager) geleitet werden, um die Erwärmung des Mediums im separaten zweiten Strömungskreis (Trinkwasserkreis) sicherzustellen (Vorrangschaltung), d.h. für den Fall, dass größere Mengen des Heizwassers des ersten Strömungskreises für die Trinkwassererwärmung im separaten zweiten Strömungskreis benötigt werden, ist die Heizwasserversorgung durch die zweite Wärmeabgabevorrichtung (z.B. Heizkörper) im zweiten Strang des ersten Strömungskreis reduziert oder unterbrochen.

In diesem Fall (Vorrangschaltung) arbeitet die Regelarmatur als Volumenstromregler und hält den Heizwasservolumenstrom durch die erste Wärmabgabevorrichtung im ersten Strang unabhängig von Druckschwankungen in ersten Strömungskreis konstant.

Wird das Heizwasser des ersten Strömungskreises nicht zur Erwärmung des Mediums im separaten zweiten Strömungskreis (Trinkwasserkreis) benötigt, fließt es ausschließlich durch die zweite Wärmeabgabevorrichtung im zweiten Strang des ersten Strömungskreises. In diesem Fall arbeitet die Regelarmatur als Differenzdruckregler und hält den Differenzdruck über dem zweiten Strang mit der zweiten Wärmeabgabevorrichtung (Heizkörper, Flächenheizung für die Wohnraumerwärmung) konstant.

Aus der DE 10 2014 110 550 A1 ist ein Regel- und Regulierventil in Form eines Zwei-Wegeventils bekannt, welches den Volumenstrom in einem Strömungskreis konstant hält, wobei jedoch keine Vorrangschaltung integriert ist, d.h. dass ein zweiter Zulaufstutzen mit einer diesem zugeordneten zweiten Durchflussreguliereinrichtung nicht vorhanden ist.

In der DE 10 2010 050 953 A1 ist ein Strömungsmengenregler beschrieben, der den Volumenstrom des ersten Strömungskreises vorrangig über die erste Wärmeabgabevorrichtung leitet (Vorrangschaltung). Ist die Vorrangschaltung inaktiv und der Volumenstrom des ersten Strömungskreises wird über die zweite Wärmeabgabevorrichtung geleitet, muss, um die Druckdifferenz über der zweiten Wärmeabgabevorrichtung konstant zu halten bzw. zu regeln ein zusätzlicher Regler eingesetzt werden, der mindestens eine externe Impulsleitung erfordert.

Aus der EP 1 264 145 B1 ist ein Regel- und Regulierventil mit einer Vorrangschaltung bekannt. Das Ventil weist neben einer Durchflussregelung auch eine Differenzdruckregelung auf, wobei die Funktionen durch separate hydraulische Komponenten realisiert werden und alle beweglichen Ventilelemente nicht auf einer gemeinsamen Ventilachse angeordnet sind.

Nachteilig an den bekannten Lösungen ist, dass die Kombination von Volumenstrom- und Differenzdruckregelung mit einer Vorrangschaltung nicht in einem Bauteil zusammengefasst ist, sodass die Realisierung der Funktionen separate Armaturen erforderlich macht. Die Ausnutzung der an der Wärme- oder Kälteabgabevorrichtung bereitgestellten Energie verschlechtert sich. Das bedeutet, dass eine große Temperaturerhöhung des Heizwassers im ersten Strömungskreis zur Einstellung einer vorgegebenen Temperatur des an der Wärmeabgabevorrichtung angeschlossenen separaten zweiten Strömungskreis (Trinkwasserkreis) notwendig ist, bzw. eine große Temperaturabsenkung des Kühlmediums im ersten Strömungskreis zur Einstellung einer vorgegebenen Temperatur des an eine Kälteabgabevorrichtung angeschlossenen separaten Trinkwasserkreislaufes erforderlich ist.

Aus der Verwendung vieler zusätzlich durchströmter Teile ergeben sich hohe Druckverluste, die eine Reduktion des Volumenstromes zur Folge haben. Dadurch muss die zur Erwärmung/Kühlung des Mediums im separaten zweiten Strömungskreis (Trinkwasserkreis) erforderliche Wärmemenge/Kältemenge durch höhere Temperaturen des Heizwassers bzw. durch niedrigere Temperaturen des Kühlwassers im ersten Strömungskreis aufrechterhalten werden.

Aus der DE 10 2004 023 077 A1 ist eine Strömungsmengenregeleinrichtung bekannt, die einen Ablaufstutzen und einen ersten sowie zweiten Zulaufstutzen aufweist.

Der Erfindung liegt daher die Aufgabe zu Grunde, eine kompakte und kostengünstig herzustellende Regelarmatur mit weniger Teilen zu schaffen, in der die Volumenstrom- und Differenzdruckregelung in Kombination mit einer Vorrangschaltung zusammengefasst ist und die geringere Reibungs- und Strömungsverluste aufweist, sodass für die Bereitstellung der erforderlichen Wärme- oder Kühlenergie an den Wärme- bzw. Kälteabgabevorrichtungen niedrigere bzw. höhere Temperaturen des ersten Strömungskreises ausreichend sind.

Zur Lösung dieser Aufgabe wird vorgeschlagen, dass das Gehäuse einen zweiten Zulaufstutzen aufweist, durch den der Volumenstrom des Strömungskreises ganz oder teilweise fließt oder abgesperrt ist, wobei der Anschlussstutzen zwischen dem ersten Zulaufstutzen und dem zweiten Zulaufstutzen und dem Ablaufstutzen angeordnet ist, dass die zweite Durchflussreguliereinrichtung dem zweiten Zulaufstutzen zugeordnet ist, dass die Regeleinrichtung den Differenzdruck über die zweite Durchflussreguliereinrichtung einschließlich der ihr stromaufwärts vorgelagerten Armaturen mit regulierbaren Strömungswiderständen und/oder Wärmeabgabevorrichtungen konstant hält, dass auch die zweite Durchflussreguliereinrichtung mit dem Stellantrieb einstellbar ist, dass das zweite Drosselelement an einem dem ersten Endbereich gegenüberliegenden zweiten Endbereich der Spindel befestigt ist, und dass das erste Drosselelement der ersten Durchflussreguliereinrichtung eine Hülse ist.

Gemeinsam mit der Spindel werden das erste Drosselelement und das zweite Drosselelement in axialer Richtung verschoben, wobei deren Verstellung den Volumenstrom der Flüssigkeit im Strömungskreis derart reguliert, dass die Wärme- oder Kühlenergie des Volumenstromes durch die erste Wärmeabgabevorrichtung an einen an diese Wärme- oder Kälteabgabevorrichtung angeschlossenen separaten zweiten Strömungskreis, z.B. Trinkwasserkreis, zur Einhaltung einer vorgegebenen Temperatur des separaten zweiten Strömungskreises übertragen wird. Durch die gemeinsame Verstellung der Durchflussreguliereinrichtungen über eine Spindel ergibt sich der Vorteil einer kompakten Bauform der Regelarmatur mit weinigen Bauteilen.

Dadurch, dass das erste Drosselelement der ersten Durchflussreguliereinrichtung eine Hülse ist, kann deren stirnseitige Ringfläche zusammen mit einer Sitzfläche des zweiten Zulaufstutzens der Regelarmatur die Ventilfunktion der ersten Durchflussreguliereinrichtung bilden.

Bevorzugt ist dabei vorgesehen, dass der gesamte Volumenstrom des Strömungskreises durch einen Abschnitt geleitet ist, der, von einem Verzweigungspunkt ausgehend, aus einem ersten Strang und zweiten Strang gebildet ist, wobei je nach Stellung der ersten und zweiten Durchflussreguliereinrichtung der Volumenstrom des Strömungskreises in zwei Teilvolumenströme durch den ersten und zweiten Strang geleitet oder der gesamte Volumenstrom entweder nur durch den ersten oder nur durch den zweiten Strang geleitet ist, wobei der gesamte Volumenstrom oder ein Teilvolumenstrom im ersten Strang dem ersten Zulaufstutzen und der Volumenstrom oder ein Teilvolumenstrom im zweiten Strang über Armaturen und/oder Wärmeabgabevorrichtungen dem zweiten Zulaufstutzen der Regelarmatur zugeführt ist und wobei in Strömungsrichtung hinter den Durchflussreguliereinrichtungen die Teilvolumenströme in dem Anschlussstutzen und noch vor der Regeleinrichtung innerhalb der Regelarmatur wieder zusammengeführt sind.

Vorzugsweise ist dabei vorgesehen, dass die stirnseitige Ringfläche und/oder der Wandbereich der Hülse mit einer Sitzfläche am zweiten Zulaufstutzen die Ventilfunktion der ersten Durchflussreguliereinrichtung bildet.

Um den durch den ersten Zulaufstutzen in die Armatur einströmenden Volumenstrom zu verringern oder zu vergrößern, verschließt oder öffnet die stirnseitige Ringfläche der Hülse eine Öffnung zwischen dem ersten Zulaufstutzen und dem Anschlussstutzen mehr oder weniger. Dadurch strömt, je nach Menge des angeforderten Mediums im separaten zweiten Strömungskreis (z.B. Trinkwasserkreis), die durch einen Volumenstromsensor erfasst wird, und/oder je nach Temperatur des angeforderten Mediums im separaten zweiten Strömungskreis, die durch einen Temperatursensor erfasst wird, mehr oder weniger Flüssigkeit des ersten Strömungskreises in die Regelarmatur ein, wobei die Signale des Volumenstrom- und/oder Temperatursensors an den am Anschlussstutzen der Regelarmatur montiertem Stellantrieb zur Ermittlung eines Stellsignals weitergeleitet werden.

Es ist vorzugsweise vorgesehen, dass das erste Drosselelement an der Spindel zumindest axial unverschieblich gehalten ist und gemeinsam mit der Spindel axial verschieblich in dem Anschlussstutzen angeordnet ist und dass das erste Drosselelement einen Einlasskanal vom ersten Zulaufstutzen mindestens teilweise öffnet oder schließt.

Vorzugsweise ist vorgesehen, dass das erste Drosselelement in einer Schließstellung an einem Dichtsitz des Reglergehäuses, des Anschlussstutzens und/oder des zweiten Zulaufstutzens anliegt und den Einlasskanal verschließt.

Vorzugsweise ist eine abgedichtete Führung an der Außenfläche des als hülsenförmiges Element ausgebildeten ersten Drosselelementes gegenüber der Innenfläche eines in den Anschlussstuten hineinragenden zylindrischen Ansatzes des zweiten Zulaufstutzens Bestandteil einer
aus der Regel- und den Durchflussreguliereinrichtungen zusammengefasste vereinfachten Baugruppe.

Für den Fall, dass keine Übertragung der Wärme- oder Kühlenergie über die im ersten Strang des ersten Strömungskreises angeordnete erste Wärmeabgabevorrichtung an das Medium im separaten zweiten Strömungskreis erfolgen soll, verschließt das erste Drosselelement der Regelarmatur den Einlasskanal vom ersten Zulaufstutzen in den Anschlussstutzen vollständig und liegt an dem Dichtsitz an, sodass der Volumenstrom in dem ersten Strang des ersten Strömungskreises zur Übertragung von Wärme- oder Kühlenergie unterbrochen ist.

Es ist vorzugsweise vorgesehen, dass der bei zumindest teilweise geöffneten Drosselelementen durch den ersten und/oder den zweiten Zulaufstutzen in die Regelarmatur eingeleitete Volumenstrom durch den Innenraum des Drosselelements, insbesondere den Innenraum eines als Hülse ausgebildeten Drosselelements, hindurch geleitet und durch den Ablaufstutzen aus der Regelarmatur ausgeleitet ist.

Dazu ist die Hülse als flüssigkeitsdurchlässiges Drosselelement vorgesehen, wobei sich eine Hülse deswegen besonders eignet, weil diese einerseits einen offenen Innenraum aufweist, durch den der Volumenstrom oder ein Teil davon hindurch geleitet werden kann, andererseits der Volumenstrom oder ein Teil davon über die von der stirnseitigen Ringfläche und der vom Dichtsitz am Anschlussstutzen gebildeten Drosselstelle in den offenen Ringraum einströmen kann. Dabei kann der Dichtsitz auch am zweiten Zulaufstutzen und/oder am Reglergehäuse angebracht sein.

Es ist bevorzugt vorgesehen, dass ein dem ersten Endbereich der Spindel gegenüberliegender zweiter Endbereich der Spindel, der in den zweiten Zulaufstutzen axial hineinragt, das Drosselelement der zweiten Durchflussreguliereinrichtung hält, welches gemeinsam mit der Spindel axial verschiebbar ist und dass das Drosselelement der zweiten Durchflussreguliereinrichtung einen mit dem zweiten Zulaufstutzen in Verbindung stehenden Einlasskanal des Volumenstroms mindestens teilweise öffnet oder schließt.

Der durch den zweiten Zulaufstutzen einströmende Volumenstrom des Heizkreises kann direkt an der Einströmöffnung reguliert werden. Dazu kann das Drosselelement mit der Spindel in axialer Richtung verschoben werden und den Einlasskanal von dem zweiten Einlassstutzen zum Inneren der Regelarmatur ganz oder teilweise schließen oder öffnen. Diese Anordnung ermöglicht die kompakte Bauform der Regelarmatur.

Vorzugsweise ist vorgesehen, dass das Drosselelement ein von der Spindel durchgriffener, federgelagerter Ventilteller ist.

Derartige Spindel-Ventiltelleranordnungen sind besonders platzsparend, wobei die Spindel zunächst einen Hub in Richtung Schließstellung ausführt bis der Ventilteller den Einlasskanal von dem zweiten Einlassstutzen vollständig absperrt und dann einen Hub weiter ausführen kann während der Ventilteller durch Federkraft unterstützt, in der Schließposition verweilt.

Bevorzugt ist vorgesehen, dass das Drosselelement der zweiten Durchflussreguliereinrichtung mit einem umlaufenden Vorsprung im Gehäuse oder darin eingesetzter Teile im Anschlussstutzen und/oder im zweiten Zulaufstutzen als Ventilsitz zusammenwirkt und den Einlasskanal mindestens teilweise öffnet oder schließt, wobei vorzugsweise vorgesehen ist, dass in Schließstellung das Drosselelement der zweiten Durchflussreguliereinrichtung an dem Vorsprung anliegt.

Zur Regulierung des Volumenstroms am zweiten Zulaufstutzen kann das Drosselelement in Richtung des Ventilsitzes oder von diesem weg verstellt werden, um den Einlasskanal in die Regelarmatur zumindest teilweise zu öffnen oder zu schließen. Sofern im separatem zweiten Strömungskreis eine große Menge erwärmtes oder gekühltes Medium (Trinkwasser) angefordert wird und von dort entsprechende Signale vom Volumenstrom und/oder Temperatursensor für eine Stellbewegung des Stellantriebes an die Regelarmatur weitergeleitet werden, liegt das Drosselelement an dem umlaufenden Vorsprung an und verschließt den Einlasskanal, sodass der Volumenstrom des ersten Strömungskreises in dem zweiten Strang und dem zugehörigen zweiten Wärme- oder Kälteabgabevorrichtung unterbrochen ist und der gesamte Volumenstrom ausschließlich über den ersten Strang und der zugehörigen ersten Wärme- oder Kälteabgabevorrichtung geleitet wird.

Auch ist bevorzugt vorgesehen, dass die Spindel im Gehäuse ggf. drehbar und längsverschieblich gelagert ist, wobei die Spindel die Regeleinrichtung abgedichtet durchgreift und an dieser längsverschieblich geführt ist.

Dies ist vorteilhaft, da sowohl die Spindel als auch die an der Spindel gehaltenen Drosselelemente der beiden Durchflussreguliereinrichtungen zusammen als eine Einheit in axialer Richtung verstellbar sind, ohne die Regeleinrichtung zu beeinflussen. Zudem ist die Regeleinrichtung durch die Spindel in axialer Richtung geführt, wobei sie den Differenzdruck unabhängig von der Hubstellung der Spindel regelt. Diese Anordnung ermöglicht die sehr kompakte Bauform der Regelarmatur.

Vorzugsweise ist zudem vorgesehen, dass die Spindel das Drosselventil der zweiten Durchflussreguliereinrichtung durchgreift und das Drosselventil an der Spindel längsverschieblich geführt ist.

Die längsverschieblich Anordnung an der Spindel ermöglicht auch bei geschlossener zweiter Durchflussreguliereinrichtung eine weitere axiale Verschiebung der Spindel. Dadurch wird ein weiteres Öffnen der Drosselstelle der ersten Durchflussreguliereinrichtung bei weiterhin durch Federkraft geschlossener zweiter Durchflussreguliereinrichtung ermöglicht.

Alternativ kann vorgesehen sein, dass die Spindel das Drosselventil der zweiten Durchflussreguliereinrichtung durchgreift und das Drosselventil an der Spindel ortsfest gehalten ist.

Bevorzugt ist vorgesehen, dass die Regeleinrichtung aus einem auf der Spindel axial beweglichen Drosselkörper und einem im Gehäuse oder im Anschlussstutzen gehaltenen Sitz für diesen besteht, wobei der Drosselkörper zum Sitz hin und von diesem weg begrenzt beweglich ist damit der Strömungskanal durch die Regeleinrichtung in seinem Querschnitt veränderbar ist. Die Spindel bildet hierbei eine axiale Führung für den Drosselkörper der Regeleinrichtung.

Eine vorteilhafte Anordnung des Sitzes der Regeleinrichtung ist gegeben, wenn dieser durch die Stirnfläche an dem zylinderförmigen Ansatz des zweiten Zulaufstutzens gebildet ist, die dem Drosselkörper der Regeleinrichtung gegenüberliegend angeordnet ist.

Dabei ist bevorzugt vorgesehen, dass der Drosselkörper und der Sitz einen Spalt bilden, durch den der Volumenstrom aus dem Anschlussstutzen in den Ablaufstutzen geleitet ist, wobei der Drosselkörper auf der Spindel in Richtung des Sitzes oder von diesem weg in Abhängigkeit von einer wirkenden Druckdifferenz verschiebbar ist und dabei der Spalt geöffnet oder teilweise geschlossen ist, wobei mehr oder weniger Flüssigkeit hindurchströmen kann. Dadurch kann die Regeleinrichtung den Differenzdruck über der ersten Durchflussreguliereinrichtung und damit den Volumenstrom, der dem ersten Zulaufstutzen zugeführt ist, konstant halten und/oder den Differenzdruck über der zweiten Durchflussreguliereinrichtung einschließlich der ihr stromaufwärts vorgelagerten Armaturen und/oder Wärmeabgabevorrichtungen konstant halten.

Vorzugsweise ist vorgesehen, dass der Drosselkörper der Regeleinrichtung ein topf- oder napfartiger Körper ist.

Vorzugsweise ist vorgesehen, dass der Drosselkörper mit einer Membran gekoppelt ist, die eine außen umlaufende Membranwulst aufweist, die an einer Innenwand des Gehäuses oder des Anschlussstutzens flüssigkeitsdicht anliegt und/oder dicht gehalten ist.

Die Membran ermöglicht eine axiale Bewegung des Drosselkörpers und dichtet gleichzeitig die vor und hinter dem Drosselkörper liegenden Kammern ab, damit keine Flüssigkeit in die jeweils andere Kammer übertreten kann und damit sich ein Differenzdruck über der Membran aufbauen kann, der durch die erste Drosselstelle der ersten Durchflussreguliereinrichtung und/oder durch die zweite Drosselstelle der zweiten Durchflussreguliereinrichtung einschließlich ihr stromaufwärts vorgelagerten Armaturen und/oder Wärme- oder Kälteabgabevorrichtungen erzeugt wird.

Es ist vorzugsweise vorgesehen, dass der Drosselkörper der Regeleinrichtung eine Dichtung aufweist, die an der Spindel dichtend anliegt, um ebenfalls die Kammern gegeneinander abzudichten.

Bevorzugt ist vorgesehen, dass der vor der ersten Durchflussreguliereinrichtung anstehende Druck über einen im Gehäuse und/oder im Anschlussstutzen ausgebildeten ersten Druckkanal in eine erste, dem Anschlussbereich für den Stellantrieb zugewandten Kammer am Drosselkörper und der Membran geleitet ist, und das der nach der ersten und zweiten Durchflussregulier-einrichtung und noch vor dem Drosselquerschnitt der Regeleinrichtung anstehende Druck in eine zweite, den Durchflussreguliereinrichtungen zugewandten Kammer am Drosselkörper und der Membran geleitet ist und dass der Drosselkörper der Regeleinrichtung auf der Spindel in Abhängigkeit von der über dem Drosselkörper und der Membran gebildeten Druckdifferenz, aufgrund unterschiedlicher Drücke in den beiden Kammern, axial verstellbar ist und so der Spalt zwischen Drosselkörper und Sitz mehr oder weniger geöffnet ist.

Für den Fall, dass der Druck in der ersten Kammer am Drosselkörpers gegenüber der zweiten Kammer steigt, wird dieser in Richtung des Sitzes verschoben, sodass der Spalt kleiner wird und trotz des Druckanstieges auf dieser Seite des Drosselkörpers der Differenzdruck über der ersten und/oder zweiten Durchflussreguliereinrichtung einschließlich dem am zweiten Zulaufstutzen angeschlossenen zweiten Strang mit der zweiten Wärme- oder Kälteabgabevorrichtung konstant gehalten wird.

Sofern der Druck in der ersten Kammer am Drosselkörper gegenüber der zweiten Kammer fällt, wird der Drosselkörper von dem Sitz weg bewegt und der Spalt wird größer, sodass auch in diesem Fall trotz des Druckabfalls der Differenzdruck über der ersten und zweiten Durchflussreguliereinrichtung und dem am zweiten Zulaufstutzen angeschlossenen zweiten Strang mit der zweiten Wärme- oder Kälteabgabevorrichtung konstant gehalten wird.

Vorzugsweise ist dabei vorgesehen, dass der Volumenstrom vom ersten Zulaufstutzen zum Ablaufstutzen von der ersten Durchflussreguliereinrichtung reguliert ist und dass der Volumenstrom vom zweiten Zulaufstutzen zum Ablaufstutzen von der zweiten Durchflussreguliereinrichtung reguliert ist und das vorzugsweise der Differenzdruck über der zweiten Durchflussreguliereinrichtung einschließlich der über ihren zweiten Zulaufstutzen stromaufwärts vorgelagerten Armaturen und/oder Wärme- oder Kälteabgabevorrichtungen durch die Regeleinrichtung konstant gehalten ist.

Bevorzugt ist vorgesehen, dass entweder bei geschlossener zweiter Durchflussreguliereinrichtung die erste Durchflussreguliereinrichtung auf einen Maximalwert aufgefahren werden kann, oder dass bei geschlossener erster Durchflussreguliereinrichtung die zweite Durchflussreguliereinrichtung auf einen Maximalwert aufgefahren werden kann.

Dadurch ergibt sich der Vorteil, dass im ersten Strömungskreis je nach Bedarf eine Vorrangschaltung für eine Wärme- oder Kühlenergiezufuhr durch den ersten Strang bzw. durch den zweiten Strang besteht.

Vorzugsweise ist vorgesehen, dass beim Öffnen der ersten Durchflussreguliereinrichtung die zweite Durchflussreguliereinrichtung zunächst hinsichtlich ihres Durchflusses reduziert ist und dass erst bei weiterem Öffnen der ersten Durchflussreguliereinrichtung die zweite Durchflussreguliereinrichtung geschlossen ist und geschlossen bleibt. Dann erfolgt im ersten Strömungskreis ausschließlich die Durchströmung der ersten Wärme- oder Kälteabgabevorrichtung im ersten Strang.

Vorteilhaft ist hierbei, dass während des Öffnungsvorgangs der ersten Durchflussreguliereinrichtung und der Geschlossenposition der zweiten Durchflussreguliereinrichtung die Spindel den Drosselkörper der zweiten Durchflussreguliereinrichtung axial beweglich durchgreift und diesen über die Federkraft einer an der Spindel fixierten Feder gegen den Ventilsitz der zweiten Durchflussreguliereinrichtung drückt.

Ein Ausführungsbeispiel der erfindungsgemäßen Regelarmatur ist in der Zeichnung dargestellt und im Folgenden näher beschrieben.

Es zeigt:
- Fig. 1: eine Systemskizze mit einem ersten Strömungskreis mit Regelarmatur und Wärme- oder Kälteerzeuger, mit einem ersten Strang mit erster Wärme- oder Kälteabgabevorrichtung und einem zweiten Strang mit zweiter Wärme- oder Kälteabgabevorrichtung und mit einem an der erster Wärme- oder Kälteabgabevorrichtung angeschlossenen separaten zweiten Strömungskreis
- Fig. 2: die Regelarmatur im Querschnitt;
- Fig. 3: einen vormontierten Einsatz der Regelarmatur im Querschnitt.

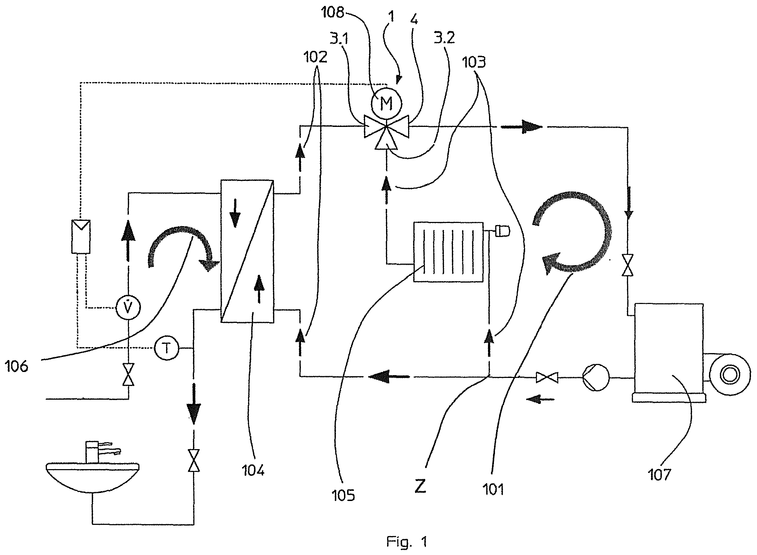

Fig. 1 zeigt einen mit Flüssigkeit betriebenen ersten Strömungskreis 101, bei dem von einem Verzweigungspunkt "Z" ausgehend ein erster Strang 102 eine erste Wärme- oder Kälteabgabevorrichtung 104 und ein zweiter Strang 103 eine zweite Wärme- oder Kälteabgabevorrichtung 105 aufweisen durch die der Volumenstrom entweder aufgeteilt in zwei Teilvolumenströmen fließt, oder vollständig in einem Strang fließt während der andere Strang abgesperrt ist. Die Verteilung des Volumenstromes auf die beiden Stränge 102, 103 erfolgt hierbei durch die in der Regelarmatur 1 vorhandene erste Durchflussreguliereinrichtung, die dem ersten Strang zugeordnet ist und der zweiten Durchflussreguliereinrichtung, die dem zweiten Strang zugeordnet ist. Die Wärme- oder Kälteabgabevorrichtungen 104, 105 können mit oder ohne Volumenstromregulierfunktion ausgestattet sein, wobei mindestens an einer Wärme- oder Kälteabgabevorrichtungen ein separater zweiter und vom ersten Strömungskreis 101 unabhängiger Strömungskreis 106 angeschlossen sein kann, in dem über Sensoren der Volumenstrom (V) und/oder die Temperatur(T) an die Regelarmatur 1 für eine Signalauswertung und -weiterverarbeitung übermittelt werden.

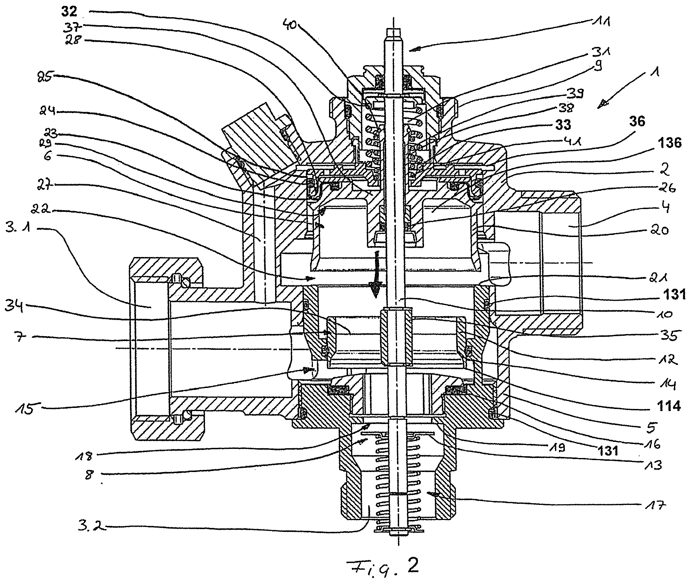

Die in Fig. 2 dargestellte Regelarmatur 1 weist ein Gehäuse 2 mit einem ersten Zulaufstutzen 3.1 und einem zweiten Zulaufstutzen 3.2 auf. Der z.B. ein von einer Umwälzpumpe 107 angetriebene Volumenstrom des ersten Strömungskreises 101 wird ab dem Verzweigungspunkt "Z" des ersten Strömungskreis entweder ganz oder teilweise über einen ersten Strang 102 mit einer Wärme- oder Kälteübertragervorrichtung 104, z.B. zur Erwärmung von Trinkwasser, dem ersten Zulaufstutzen 3.1 zugeführt und/oder ganz oder teilweise ab dem Verzweigungspunkt "Z" über einen zweiten Strang 103 mit einer Wärme- oder Kälteübertragervorrichtung 105 dem zweiten Zulaufstutzen 3.2 zugeführt. Des Weiteren weist das Gehäuse 2 einen gemeinsamen Ablaufstutzen 4 auf, über den der Volumenstrom aus der Regelarmatur 1 abgeführt wird. Zwischen den Zulaufstutzen 3.1 und 3.2 und dem Ablaufstutzen 4 ist ein von dem Volumenstrom durchströmter und von einer Spindel 10 axial durchgriffener Anschlussstutzen 5 mit einer darin eingesetzten Regeleinrichtung 6, mit einer dem ersten Zulaufstutzen 3.1 zugeordneten ersten Durchflussreguliereinrichtung 7 und einer dem zweiten Zulaufstutzen 3.2 zugeordneten zweiten Durchflussreguliereinrichtung 8 angeordnet. Die Durchflussreguliereinrichtungen 7 und 8 sind an der Spindel 10 gehalten.

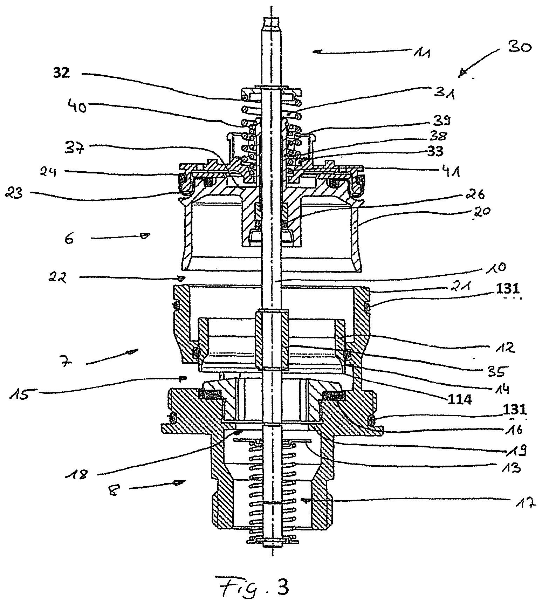

Um die Regeleinrichtung 6 und die Spindel 10 mit den daran angeordneten Durchflussreguliereinrichtungen 7 und 8 in das Gehäuse 2 einbauen zu können und dabei die kompakte Bauform des Gehäuses 2 gewährleisten zu können, umfasst das Gehäuse 2 einen Einsatz 30, beispielsweise einen Rohrstutzen, der koaxial zu dem Anschlussstutzen 5 in das Gehäuse 2 einsetzbar ist. Fig. 3 zeigt diesen Einsatz 30 mit den vormontierten Bauteilen.

An dem Einsatz 30 sind Dichtungen 131 angeordnet, die in eingesetztem Zustand des Einsatzes 30 in das Gehäuse 2, an dem Gehäuse 2 anliegen, um ein Austreten der die Regelarmatur 1 durchströmenden Flüssigkeit zu verhindern.

Die Spindel 10 ist axial verschiebbar in dem Gehäuse 2 gelagert und durchgreift einen Drosselkörper 20 der Regeleinrichtung 6 und ein erstes Drosselelement 12 der ersten Durchflussreguliereinrichtung 7 und ein zweites Drosselelement 13 der zweiten Durchflussreguliereinrichtung 8. Der Drosselkörper 20 ist beweglich an der Spindel 10 gehalten, sodass dieser unabhängig von der Spindel 10 bewegbar ist, wobei die Spindel 10 den Drosselkörper 20 in axialer Richtung führt. Zwischen dem Drosselkörper 20 und der Spindel 10 ist eine Dichtung 26 vorgesehen, die ebenfalls ein Austreten der die Regelarmatur 1 durchströmenden Flüssigkeit verhindert.

Das erste Drosselelement 12 ist zumindest in axialer Richtung unverschieblich an der Spindel 10 fixiert. Auch das zweite Drosselelement 13 ist an der Spindel 10 fixiert, wobei ggf. eine begrenzte Axialverschiebung auf der Spindel 10 erfolgen kann.

Ein erster Endbereich 11 der Spindel 10 ragt aus dem Anschlussstutzen 5 vor und ist mit einem Stellantrieb 108 verbindbar, wobei der Stellantrieb an einer Anschlussgeometrie 9 des Anschlussstutzens 5 montierbar ist. Ein im separatem zweiten Strömungskreis 106 integrierter Volumenstrom(V)- und Temperatursensor(T) leiten Stellsignale an den Stellantrieb 108, der die Spindel 10 entsprechend der Signale in axialer Richtung verstellt. Gemeinsam mit der Spindel 10 werden auch das erste Drosselelement 12 und das zweite Drosselelement 13 in axialer Richtung verschoben, wobei deren Verstellung die Durchflussmenge der Flüssigkeit im ersten Strömungskreis 101 auf einen ersten Strang 103 mit dem Plattenwärmetauscher 104 und auf einen zweiten Strang 102 mit einer als Raumheizkörper ausgebildete Wärmeabgabevorrichtung 105 reguliert. Der Stellantrieb 108 ist nur in der Figur 1 symbolisch dargestellt.

Die Spindel 10 weist am ersten Endbereich 11 eine Feder 31 auf, deren erster Endbereich 32 an der Spindel 10 befestigt ist und die sich mit einem zweiten Endbereich 33 an Teilen des Einsatzes 30 abstützt. Für den Fall, dass die Spindel 10 bei deren Verstellung durch den Stellantrieb in Pfeilrichtung in die Regelarmatur 1 hineingedrückt wird, ist die Feder 31 gespannt. Erfolgt dann eine Verstellung in entgegengesetzter Richtung, wird die Rückstellung der Spindel 10 durch die Feder 31 unterstützt und sichergestellt.

Um den Volumenstrom, der vom ersten Strang 102 und den Plattenwärmetauscher 104 kommend durch den ersten Zulaufstutzen 3.1 in die Regelarmatur 1 eingeleitet wird und zur Erwärmung des Mediums im separaten zweiten Strömungskreis 106 dient, einzustellen, ist das erste Drosselelement 12 der ersten Durchflussreguliereinrichtung 7 vorgesehen, welches als Hülse ausgebildet ist. Diese weist eine zentral in ihrem Innenraum angeordnete und beispielsweise über Speichen 34 mit dem Wandbereich 14 verbundene Befestigungshülse 35 auf. Mit der Befestigungshülse 35 ist die Hülse an der Spindel 10 befestigt.

Das als Hülse ausgebildete Drosselelement 12 wirkt mit einem Dichtsitz 16 zusammen, wobei die stirnseitige Ringfläche 14 des Drosselelementes 12 bei der axialen Verschiebung der Spindel 10 in Richtung des Dichtsitzes 16 oder von diesem weg bewegt ist, sodass ein erster Einlasskanal 15, der vom ersten Zulaufstutzen 3.1 in den Anschlussstutzen 5 führt, zumindest teilweise geöffnet oder verschlossen ist.

Beim Öffnen der ersten Durchflussreguliereinrichtung 7 bzw. der zweiten Durchflussreguliereinrichtung 8 ist die zweite bzw. die erste Durchflussreguliereinrichtung zunächst hinsichtlich ihres Durchflusses reduziert. Erst bei weiterem Öffnen der ersten 7 bzw. zweiten Durchflussreguliereinrichtung 8 ist die zweite bzw. erste Durchflussreguliereinrichtung geschlossen. Dadurch sind die Durchströmung sowohl des ersten Stranges 102 als auch des zweiten Stranges 103 zunächst gleichzeitig möglich, so dass z. B. über die erste Wärmeübertragervorrichtung 104 des ersten Stranges 102 das Medium des separaten zweiten Strömungskreises 106 (z. B. Trinkwasser) erwärmt werden kann, während über die zweite Wärmeübertragervorrichtung 105 des zweiten Stranges 103 (z. B. ein Heizkörper) ebenfalls Wärmeenergie an ein weiteres Medium (z. B. Raumluft) abgegeben werden kann.

Erst wenn die erste bzw. zweite Durchflussreguliereinrichtung 7, 8 geschlossen ist, steht der vollständige Volumenstrom des ersten Strömungskreises der Versorgung des ersten Stranges bzw. des zweiten Stranges zu Verfügung.

Wird also z. B. im separaten zweiten Strömungskreis 106 ein hoher Volumenstrom benötigt (z. B. um viel warmes Trinkwasser bereitzustellen), sendet der Volumenstromsensor (V) ein zugehöriges Stellsignal an den Stellantrieb 108, der die Spindel 10 entgegen der Pfeilrichtung, siehe Figur 2, bewegt und dadurch eine Verstellung der Drosselelemente 12, 13 bewirkt. Das erste Drosselelement 12 wird von dem Dichtsitz 16 weg verschoben, sodass der erste Einlasskanal 15 geöffnet wird. Gleichzeitig wird der durch den zweiten Zulaufstutzen 3.2 in die Regelarmatur 1 eingeleitete Volumenstrom, der zur Versorgung des zweiten Stranges mit der darin als Heizkörper ausgebildeten zweiten Wärmeübertragervorrichtung dient, abgesperrt. Diese Absperrfunktion wird durch das zweite Drosselelement 13 der zweiten Durchflussreguliereinrichtung 8 hergestellt, welches als federgelagerter Ventilteller ausgebildet ist. Der Ventilteller 13 ist an einem zweiten Endbereich 17 der Spindel 10 angeordnet, der dem ersten Endbereich 11 gegenüberliegt und der den zweiten Zulaufstutzen 3.2 axial durchgreift. Der Ventilteller 13 wirkt mit einem Vorsprung 19 als Ventilsitz zusammen zwischen denen der Einlasskanal 18 gebildet ist und der in der Geschlossenstellung am Vorsprung 19 anliegt.

Damit die Spindel 10 in dieser Schließstellung in ihrer axialen Beweglichkeit nicht blockiert wird, ist der Ventilteller 13 federgelagert und lässt eine begrenzte axiale Verschiebung des Ventiltellers auf der Spindel 10 zu.

Fließt im umgekehrten Fall im separatem zweiten Strömungskreis 106 kein Volumenstrom, sodass keine Übertragung von Wärmeenergie über die Wärmeübertragervorrichtung 104 an das Medium des separaten zweiten Strömungskreises erfolgt, wird die Spindel 10 in Pfeilrichtung und damit auch das erste Drosselelement 12 in Richtung des Dichtsitzes 16 und das zweite Drosselelement 13 von dem Vorsprung 19 weg verschoben, sodass jetzt der erste Einlasskanal 15 verschlossen und der zweite Einlasskanal 18 geöffnet ist.

Der in die Regelarmatur 1 einströmende Volumenstrom wird dann durch den Innenraum des hülsenförmigen ersten Drosselelements 12 hindurch in den Anschlussstutzen 5 eingeleitet und durch den Ablaufstutzen 4 aus der Regelarmatur 1 ausgeleitet.

Die Regeleinrichtung 6 hält in dieser Funktionsstellung den Druck über der im Zulaufstutzen 3.2 untergebrachten zweiten Durchflussreguliereinrichtung 8 einschließlich des am Zulaufstutzen 3.2 angeschlossenen zweiten Stranges 103 mit der Wärmeabgabevorrichtung 105 konstant.

Die Regeleinrichtung 6 besteht aus dem von der Spindel 10 axial durchgriffenen Drosselkörper 20, der eine topf- oder napfartige Form aufweist, und einem in dem Gehäuse 2 angeordneten Sitz 21, der durch den Einsatz 30 gebildet ist. Der Drosselkörper 20 und der Sitz 21 bilden einen Spalt 22, durch den der Volumenstrom aus dem Anschlussstutzen 5 in den Ablaufstutzen 4 geleitet ist. Je nach anstehenden Druckverhältnissen ist der Drosselkörper 20 in Richtung des Sitzes 21 oder von diesem weg angeordnet und der Spalt 22 ist entsprechend geöffnet oder teilweise geschlossen.

Zwischen dem Drosselkörper 20 und der Spindel 10 ist eine Dichtung 26 vorgesehen, die verhindert, dass Flüssigkeit aus dem System austritt. Der Drosselkörper 20 ist axial beweglich auf der Spindel 10 angeordnet, sodass eine Verschiebung der Spindel 10 keinen Einfluss auf den Drosselkörper 20 nimmt. Der Drosselkörper 20 ist mit einer Membran 23 gekoppelt, die eine außen umlaufende Membranwulst 24 aufweist, die an einer Innenwand 25 des Anschlussstutzens 5 flüssigkeitsdicht anliegt. Die Membran 23 ermöglicht eine axiale Bewegung des Drosselkörpers 20 und dichtet gleichzeitig die vor und hinter dem Drosselkörper 20 liegenden Kammern 36,136 ab, damit keine Flüssigkeit in die jeweils andere Kammer 36,136 übertreten kann.

Im Gehäuse 2 ist ein Druckkanal 27 ausgebildet, durch den der vor der ersten Durchflussreguliereinrichtung 7 im ersten Zulaufstutzen 3.1 anstehende Druck des durch die Regelarmatur 1 strömenden Volumenstroms in die Kammer 36 auf eine Seite 28 der Membran 23 geleitet ist.

Der in Strömungsrichtung nach der ersten und der zweiten Durchflussreguliereinrichtung 7,8 und vor der Regeleinrichtung 6 anstehende Druck steht in der Kammer 136 an, durch den eine Kraft auf die Bodeninnenseite 29 des topfförmigen Drosselkörpers 20 wirkt, sodass der Drosselkörper 20 in Abhängigkeit von der Druckdifferenz und der auf den Drosselkörper wirkenden Gegenkraft durch die Feder 39 auf der Spindel 10 axial verstellbar ist.

Ist der Druck in der Kammer 36, durch den eine Kraft auf die Bodenaußenseite 28 des topfförmigen Drosselkörpers 20 wirkt, höher als der Druck in der Kammer 136 bzw. die auf die Bodeninnenseite 29 wirkende Kraft, wird der Drosselkörper 20 in Pfeilrichtung in Richtung des Sitzes 21 verschoben und trotz der erfolgten Druckerhöhung auf der Seite 28 bzw. im Einlassstutzen 3.1 wird der Differenzdruck über der ersten und/oder zweiten Durchflussreguliereinrichtung 7,8 sowie dem am zweiten Zulaufstutzen 3.2 angeordneten zweiten Strang 103 konstant gehalten.

Für den Betriebszustand, bei dem die erste Durchflussreguliereinrichtung 7 den ersten Einlasskanal 15 verschließt, wirkt der zu regelnde Differenzdruck über der zweiten durchströmten Durchflussreguliereinrichtung 8 einschließlich dem am zweiten Zulaufstutzen angeschlossenen zweiten Strang 103 mit der darin angeordneten Wärmeabgabevorrichtung 105, wobei die Wärmeabgabevorrichtung mit einem regulierbaren Strömungswiderstand 109 ausgestattet sein kann. Bei diesem Betriebszustand wirkt der Strang 102, in dem kein Volumenstrom stattfindet, als Druckleitung, die den Druck ab dem Verzeigungspunkt "Z" noch vor der Wärmeabgabevorrichtung 105 mit dem regulierbaren Strömungswiderstand 109 über den ersten Zulaufstutzen 3.1 und den Druckkanal 27 in die Kammer 36 über die Bodenaußenseite 28 leitet.

Für den umgekehrten Fall, dass der Druck auf der Bodeninnenseite 29 höher ist, wird der Drosselkörper 20 entgegen der Pfeilrichtung von dem Sitz 21 weg verschoben und auch in diesem Fall wird der Differenzdruck über der ersten und zweiten Durchflussreguliereinrichtung 7,8 sowie dem am zweiten Zulaufstutzen 3.2 angeordneten zweiten Strang 103 einschließlich der Wärmeabgabevorrichtung 105 konstant gehalten wird.

Der Boden 37 des topfartigen Drosselkörpers 20 weist eine senkrecht abragende Hülse 38 auf, die die Spindel 10 umgreift und auf die eine Feder 39 gesteckt ist. Die Feder 39 ist mit einem ersten Ende 40 an einem Endbereich der Hülse 38 befestigt und mit einem zweiten Ende 41 liegt die Feder 39 an Teilen des Einsatzes 30 an und stützt sich dort ab. Sofern aufgrund einer Druckdifferenz der Drosselkörper 20 sich in einer bestimmten Position zum Sitz 21 befindet, ist die von der Feder 39 erzeugte Kraft im Gleichgewicht mit der durch die Druckdifferenz über den Drosselkörper 20 erzeugten Kraft.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

### Bezugszeichen

- 1: Regelarmatur
- 2: Gehäuse
- 3.1: erster Zulaufstutzen
- 3.2: zweiter Zulaufstutzen
- 4: Ablaufstutzen
- 5: Anschlussstutzen
- 6: Regeleinrichtung
- 7: erste Durchflussreguliereinrichtung
- 8: zweite Durchflussreguliereinrichtung
- 9: Anschlussgeometrie
- 10: Spindel
- 11: erster Endbereich
- 12: erstes Drosselelement
- 13: zweites Drosselelement
- 14: Wandbereich
- 15: erster Einlasskanal
- 16: Dichtsitz
- 17: zweiter Endbereich der Spindel
- 18: zweiter Einlasskanal
- 19: Vorsprung
- 20: Drosselkörper
- 21: Sitz
- 22: Spalt
- 23: Membran
- 24: Membranwulst
- 25: Innenwand
- 26: Dichtung
- 27: Druckkanal
- 28: Bodenaußenseite des topfförmigen Drosselkörpers/ Membran
- 29: Bodeninnenseite des topfförmigen Drosselkörpers/ Membran
- 30: Einsatz
- 31: Feder am ersten Endbereich der Spindel
- 32: erster Endbereich der Feder
- 33: zweiter Endbereich der Feder
- 34: Speichen
- 35: Befestigungshülse
- 36: obere Kammer
- 37: Boden des Drosselkörpers
- 38: Hülse
- 39: Feder am Drosselkörper
- 40: erstes Ende der Feder am Drosselkörper
- 41: zweites Ende der Feder am Drosselkörper

- 101: erster Strömungskreis
- 102: erster Strang
- 103: zweiter Strang
- 104: erste Wärme- oder Kälteabgabevorrichtung
- 105: zweite Wärme- oder Kälteabgabevorrichtung
- 106: separater zweiter Strömungskreis
- 107: Umwälzpumpe
- 108: Stellantrieb (Symbol)
- 114: stirnseitige Ringfläche am Wandbereich
- 131: Dichtungen
- 136: untere Kammer
- "Z": Verzweigungspunkt
- "V": Volumenstromsensor
- "T": Temperatursensor

## Patentansprüche

1. Regelarmatur (1) zur Regelung des Differenzdruckes und/oder zur Regelung und Regulierung des Volumenstromes eines mit Flüssigkeit betriebenen Strömungskreises (101), wobei die Regelarmatur ein Gehäuse (2) aufweist mit einem ersten Zulaufstutzen(3.1), durch den der Volumenstrom des Strömungskreises (101) ganz oder teilweise fließt oder abgesperrt ist, mit einem Ablaufstutzen (4) über den der gesamte Volumenstrom des Strömungskreises abgeführt ist und mit einem zwischen dem ersten Zulaufstutzen (3.1) und dem Ablaufstutzen (4) angeordneten vom gesamten Volumenstrom durchströmten Anschlussstutzen (5), in den ein aus einer Regulier- und Regeleinrichtung gebildeter Einsatz (30) integriert ist, wobei die Reguliereinrichtung aus einer dem ersten Zulaufstutzen (3.1) zugeordneten ersten Durchflussreguliereinrichtung (7) und einer zugeordneten zweiten Durchflussreguliereinrichtung (8) besteht, wobei die Regeleinrichtung (6) den Differenzdruck über die erste Durchflussreguliereinrichtung und damit den Volumenstrom, der dem ersten Zulaufstutzen zugeführt ist, konstant hält und/oder die Regeleinrichtung den Differenzdruck über die zweite Durchflussreguliereinrichtung einschließlich der ihr stromaufwärts vorgelagerten Armaturen mit regulierbaren Strömungswiderständen (109) und/oder Wärmeabgabevorrichtungen (105) konstant hält und wobei der Anschlussstutzen (5)oder daran angeordnete Teile eine Anschlussgeometrie (9) für einen Stellantrieb (108) aufweist, mit dem die erste Durchflussreguliereinrichtung und die zweite Durchflussreguliereinrichtung der Regulier- und Regeleinrichtung einstellbar ist, wobei eine im Anschlussstutzen (5) der Regelarmatur axial verschiebbar angeordnete Spindel (10) einen aus dem Anschlussstutzen vorragenden, vom Stellantrieb betätigten ersten Endbereich (11) und mindestens ein an der Spindel befestigtes erstes Drosselelement (12) aufweist, welches Bestandteil der ersten Durchflussreguliereinrichtung (7) ist, und mindestens ein zweites Drosselelement (13) aufweist, welches Bestandteil der zweiten Durchflussreguliereinrichtung ist und wobei ein Abschnitt der Spindel zwischen dem ersten Endbereich (11) und dem ersten Drosselelement (12) als axiale Führung für einen beweglichen Drosselkörper (20) der Regeleinrichtung (6) vorgesehen ist, **dadurch gekennzeichnet, dass** das Gehäuse (2) einen zweiten Zulaufstutzen (3.2) aufweist, durch den der Volumenstrom des Strömungskreises ganz oder teilweise fließt oder abgesperrt ist, wobei der Anschlussstutzen (5) zwischen dem ersten Zulaufstutzen (3.1) und dem zweiten Zulaufstutzen (3.2) und dem Ablaufstutzen (4) angeordnet ist, dass die zweite Durchflussreguliereinrichtung (8) dem zweiten Zulaufstutzen (3.2) zugeordnet ist, dass die Regeleinrichtung (6) den Differenzdruck über die zweite Durchflussreguliereinrichtung (8) einschließlich der ihr stromaufwärts vorgelagerten Armaturen mit regulierbaren Strömungswiderständen (109) und/oder Wärmeabgabevorrichtungen (105) konstant, dass auch die zweite Durchflussreguliereinrichtung (8) mit dem Stellantrieb (108) einstellbar ist, dass das zweite Drosselelement (13) an einem dem ersten Endbereich (11) gegenüberliegenden zweiten Endbereich (17) der Spindel (10) befestigt ist, und dass das erste Drosselelement (12) der ersten Durchflussreguliereinrichtung (7) eine Hülse ist.

2. Regelarmatur nach Anspruch 1, **dadurch gekennzeichnet, dass** der gesamte Volumenstrom des Strömungskreises (101)durch einen Abschnitt geleitet ist, der, von einem Verzweigungspunkt (Z) ausgehend, aus einem ersten Strang (103) und zweiten Strang (102) gebildet ist, wobei je nach Stellung der ersten und zweiten Durchflussreguliereinrichtung der Volumenstrom des Strömungskreises (101) in zwei Teilvolumenströme durch den ersten und zweiten Strang geleitet oder der gesamte Volumenstrom entweder nur durch den ersten oder nur durch den zweiten Strang geleitet ist, wobei der gesamte Volumenstrom oder ein Teilvolumenstrom im ersten Strang dem ersten Zulaufstutzen (3.1) und der Volumenstrom oder ein Teilvolumenstrom im zweiten Strang über Armaturen (109) und/oder Wärmeabgabevorrichtungen (105) dem zweiten Zulaufstutzen (3.2) der Regelarmatur zugeführt ist und wobei in Strömungsrichtung hinter den Durchflussreguliereinrichtungen die Teilvolumenströme in dem Anschlussstutzen und noch vor der Regeleinrichtung (6) innerhalb der Regelarmatur wieder zusammengeführt sind.

3. Regelarmatur nach Anspruch 1 oder 2, **dadurch gekennzeichnet, dass** die stirnseitige Ringfläche (114) und/oder der Wandbereich (14) der Hülse mit einer Sitzfläche am zweiten Zulaufstutzen (3.2) die Ventilfunktion der ersten Durchflussreguliereinrichtung (7) bildet.

4. Regelarmatur nach einem der Ansprüche 1 bis 3, **dadurch gekennzeichnet, dass** das erste Drosselelement (12) an der Spindel (10) zumindest axial unverschieblich gehalten ist und gemeinsam mit der Spindel (10) axial verschieblich in dem Anschlussstutzen (5) angeordnet ist und dass das erste Drosselelement (12) einen Einlasskanal (15) vom ersten Zulaufstutzen (3.1) mindestens teilweise öffnet oder schließt.

5. Regelarmatur nach Anspruch 1 bis 4, **dadurch gekennzeichnet, dass** das erste Drosselelement (12) in einer Schließstellung an einem Dichtsitz (16) des Reglergehäuses (2), des Anschlussstutzens (5) anliegt und/oder des zweiten Zulaufstutzens (3.2) den Einlasskanal (15) verschließt.

6. Regelarmatur nach Anspruch 1 bis 5, **dadurch gekennzeichnet, dass** eine abgedichtete Führung an der Außenfläche des als hülsenförmiges Element ausgebildeten ersten Drosselelementes (12) gegenüber der Innenfläche eines in den Anschlussstutzen (5) hineinragenden zylindrischen Ansatzes des zweiten Zulaufstutzens (3.2) Bestandteil einer aus den Regel- und Durchflussreguliereinrichtungen bestehenden, kartuschenähnlichen Baugruppe ist.

7. Regelarmatur nach einem der Ansprüche 1 bis 6, **dadurch gekennzeichnet, dass,** bei zumindest teilweise geöffneten Drosselelementen (12, 13), der durch den ersten und/oder den zweiten Zulaufstutzen (3.1, 3.2) in die Regelarmatur (1) eingeleitete Volumenstrom durch den Innenraum des Drosselelements (12), insbesondere den Innenraum eines als Hülse ausgebildeten ersten Drosselelements (12), hindurch geleitet und durch den Ablaufstutzen (4) aus der Regelarmatur (1) ausgeleitet ist.

8. Regelarmatur nach einem der Ansprüche 1 bis 7, **dadurch gekennzeichnet, dass** ein dem ersten Endbereich (11) der Spindel (10) gegenüberliegender zweiter Endbereich (17) der Spindel, der in den zweiten Zulaufstutzen (3.2) axial hineinragt oder durchgreift, das zweite Drosselelement (13) der zweiten Durchflussreguliereinrichtung (8) hält, welches gemeinsam mit der Spindel (10) axial verschiebbar ist und dass das zweite Drosselelement einen mit dem zweiten Zulaufstutzen in Verbindung stehenden Einlasskanal (18) des Volumenstroms mindestens teilweise öffnet oder schließt.

9. Regelarmatur nach einem der Ansprüche 1 bis 8, **dadurch gekennzeichnet, dass** das zweite Drosselelement (13) ein von der Spindel (10) durchgriffener, federgelagerter Ventilteller ist.

10. Regelarmatur nach einem der Ansprüche 1 bis 9, **dadurch gekennzeichnet, dass** das Drosselelement (13) der zweiten Durchflussreguliereinrichtung (8) mit einem umlaufenden Vorsprung (19) im zweiten Zulaufstutzen (3.2) als Ventilsitz zusammenwirkt und den Einlasskanal (18) mindestens teilweise öffnet oder schließt.

11. Regelarmatur nach einem der Ansprüche 1 bis 10, **dadurch gekennzeichnet, dass** das Drosselelement (13) der zweiten Durchflussreguliereinrichtung in einer Schließstellung an dem Vorsprung (19) anliegt und den Einlasskanal (18) verschließt.

12. Regelarmatur nach einem der Ansprüche 1 bis 11, **dadurch gekennzeichnet, dass** die Spindel (10) im Gehäuse (2) längsverschieblich gelagert ist, wobei die Spindel (10) die Regeleinrichtung (6) abgedichtet durchgreift und die Regeleinrichtung 6 an der Spindel (10) längsverschieblich geführt ist.

13. Regelarmatur nach einem der Ansprüche 1 bis 12, **dadurch gekennzeichnet, dass** die Spindel (10) das Drosselventil (13) der zweiten Durchflussreguliereinrichtung (8) durchgreift und das Drosselventil (13) an der Spindel (10) längsverschieblich geführt ist.

14. Regelarmatur nach einem der Ansprüche 1 bis 13, **dadurch gekennzeichnet, dass** die Spindel (10) das Drosselventil (13) der zweiten Durchflussreguliereinrichtung (8) durchgreift und das Drosselventil (13) an der Spindel (10) ortsfest gehalten ist.

15. Regelarmatur nach einem der Ansprüche 1 bis 14, **dadurch gekennzeichnet, dass** die Regeleinrichtung (6) aus einem auf der Spindel (10) axial beweglichen Drosselkörper (20) und einem im Gehäuse (2) oder im Anschlussstutzen (5) gehaltenen Sitz (21) für diesen besteht, wobei der Drosselkörper (20) zum Sitz (21) hin und von diesem weg begrenzt beweglich ist damit der Strömungskanal durch die Regeleinrichtung (6) in seinem Querschnitt veränderbar ist.

16. Regelarmatur nach einem der Ansprüche 1 bis 15, **dadurch gekennzeichnet, dass** der Sitz (21) der Regeleinrichtung (6) durch die Stirnfläche an dem zylinderförmigen Ansatz des zweiten Zulaufstutzens (3.2) gebildet ist, die dem Drosselkörper (20) der Regeleinrichtung gegenüberliegend angeordnet ist.

17. Regelarmatur nach einem der Ansprüche 1 bis 16, **dadurch gekennzeichnet, dass** alle auf der Spindel (10) geführten und/oder gehaltenen Komponenten der Regel- und Durchflussreguliereinrichtungen und der zweite Zulaufstutzen (3.2) eine kartuschenähnliche Baugruppe bilden, die als Einsatz (30) von einer Seite in das Gehäuse (2) der Regelarmatur (1) montierbar ist.

18. Regelarmatur nach Anspruch 17, **dadurch gekennzeichnet, dass** der Drosselkörper (20) und der Sitz (21) einen Spalt (22) bilden, durch den der Volumenstrom aus dem Anschlussstutzen (5) in den Ablaufstutzen (4) geleitet ist, wobei der Drosselkörper (20) auf der Spindel in Richtung des Sitzes (21) oder von diesem weg in Abhängigkeit von einer wirkenden Druckdifferenz verschiebbar ist und der Spalt (22) geöffnet oder teilweise geschlossen ist.

19. Regelarmatur nach Anspruch 15 bis 18, **dadurch gekennzeichnet, dass** der Drosselkörper (20) ein topf- oder napfartiger Körper ist.

20. Regelarmatur nach einem der Ansprüche 15 bis 19, **dadurch gekennzeichnet, dass** der Drosselkörper (20) mit einer Membran (23) gekoppelt ist, die eine außen umlaufende Membranwulst (24) aufweist, die an einer Innenwand (25) des Gehäuses (2) oder des Anschlussstutzens (5) flüssigkeitsdicht anliegt und/oder dicht gehalten ist.

21. Regelarmatur nach einem der Ansprüche 15 bis 20, **dadurch gekennzeichnet, dass** der Drosselkörper (20) der Regeleinrichtung (6) eine Dichtung (26) aufweist, die an der Spindel (10) dichtend anliegt.

22. Regelarmatur nach einem der Ansprüche 15 bis 21, **dadurch gekennzeichnet, dass** der vor der ersten Durchflussreguliereinrichtung (7) im ersten Zulaufstutzen (3.1) anstehende Druck des durch die Regelarmatur (1) strömenden Volumenstroms über einen im Gehäuse (2) und/oder im Anschlussstutzen (5) ausgebildeten ersten Druckkanal (27) in eine obere Kammer (36) auf die Bodenaußenseite (28) des topfförmigen Drosselkörpers (20) oder der Membran (23) geleitet ist und dass der nach der ersten und der zweiten Durchflussreguliereinrichtung (8) und vor dem Drosselquerschnitt der Regeleinrichtung (6) anstehende Druck in eine untere Kammer (136) auf die der Bodenaußenseite (28) gegenüberliegende Bodeninnenseite (29) des topfförmigen Drosselkörpers (20) geleitet ist und dass der Drosselkörper (20) in Abhängigkeit von der Druckdifferenz auf der Spindel (10) axial verschiebbar ist und so der Spalt (22) zwischen Drosselkörper (20) und Sitz (21) mehr oder weniger geöffnet ist.

23. Regelarmatur nach einem der Ansprüche 1 bis 22, **dadurch gekennzeichnet, dass** der Volumenstrom vom ersten Zulaufstutzen (3.1) zum Ablaufstutzen (4) über die erste Durchflussreguliereinrichtung (7) reguliert ist und dass der Volumenstrom vom zweiten Zulaufstutzen (3.2) zum Ablaufstutzen (4) über die zweite Durchflussreguliereinrichtung (8) reguliert ist und dass der Differenzdruck über der ersten Durchflussreguliereinrichtung (7) und/oder der zweiten Durchflussreguliereinrichtung (8) einschließlich des vor der zweiten Durchflussreguliereinrichtung über den zweiten Zulaufstutzen (3.2) angeordneten zweiten Stranges (103) durch die Regeleinrichtung (6) konstant gehalten ist.

24. Regelarmatur nach einem der Ansprüche 1 bis 23, **dadurch gekennzeichnet, dass** entweder bei geschlossener zweiter Durchflussreguliereinrichtung (8) die erste Durchflussreguliereinrichtung (7) auf einen Maximalwert aufgefahren werden kann, oder dass bei geschlossener erster Durchflussreguliereinrichtung die zweite Durchflussreguliereinrichtung auf einen Maximalwert aufgefahren werden kann.

25. Regelarmatur nach einem der Ansprüche 1 bis 24, **dadurch gekennzeichnet, dass** bei geschlossener erster Durchflussreguliereinrichtung (7) die zweite Durchflussreguliereinrichtung (8) maximal geöffnet ist.

26. Regelarmatur nach einem der Ansprüche 1 bis 25, **dadurch gekennzeichnet, dass** beim Öffnen der ersten Durchflussreguliereinrichtung (7) die zweite Durchflussreguliereinrichtung (8) zunächst hinsichtlich ihres Durchflusses reduziert ist und dass erst bei weiterem Öffnen der ersten Durchflussreguliereinrichtung (7) die zweite Durchflussreguliereinrichtung (8) geschlossen ist.

## Claims

1. A control valve assembly (1) for controlling the differential pressure and/or for controlling and regulating the volume flow of a flow circuit (101) operated with a liquid, the control valve assembly including a housing (2) with a first entry port (3.1), through which the volume flow of the flow circuit (101) flows or is blocked totally or partially, with an exit port (4), through which the total volume flow of the flow circuit is discharged, and with a connection port (5) disposed between the first entry port (3.1) and the exit port (4) and passed by the total volume flow, in said connection port (5) an insert (30) formed of a regulation and control device being integrated, the regulation device consisting of a first flow regulation device (7) associated with the first entry port (3.1) and an associated second flow regulation device (8), the control device (6) keeping constant the differential pressure over the first flow regulation device and thus the volume flow that is supplied to the first entry port, and/or the control device keeping constant the differential pressure over the second flow regulation device including the valve assemblies arranged upstream thereof with adjustable flow resistances (109) and/or heat emitting devices (105), and the connection port (5) or parts disposed thereat having a connection geometry (9) for an actuator (108), by means of which the first flow regulation device and the second flow regulation device of the regulation and control device is adjustable, a spindle (10) disposed axially displaceably in the connection port (5) of the control valve assembly including a first end section (11) protruding from the connection port and being actuated by the actuator and at least one first throttle element (12) attached at the spindle, said first throttle element (12) being part of the first flow regulation device (7), and at least one second throttle element (13) being part of the second flow regulation device, and wherein a portion of the spindle between the first end section (11) and the first throttle element (12) is provided as an axial guide for a movable throttle body (20) of the control device (6), **characterized by that** the housing (2) includes a second entry port (3.2), through which the volume flow of the flow circuit flows or is blocked totally or partially, the connection port (5) being disposed between the first entry port (3.1) and the second entry port (3.2) and the exit port (4), that the second flow regulation device (8) is associated with the second entry port (3.2), that the control device (6) keeps constant the differential pressure over the second flow regulation device (8) including the valve assemblies disposed upstream thereof with adjustable flow resistances (109) and/or heat emitting devices (105), that the second flow regulation device (8) with the actuator (108) is also adjustable, that the second throttle element (13) is attached at a second end section (17) of the spindle (10) opposed to the first end section (11), and that the first throttle element (12) of the first flow regulation device (7) is a sleeve.

2. The control valve assembly according to claim 1, **characterized by that** the total volume flow of the flow circuit (101) is conducted through a portion, which, starting from a branching point (Z), is formed of a first branch (103) and a second branch (102), wherein, depending on the position of the first and second flow regulation devices, the volume flow of the flow circuit (101) is conducted in two partial volume flows through the first and second branches, or the total volume flow is conducted either only through the first or only through the second branch, the total volume flow or a partial volume flow in the first branch being supplied to the first entry port (3.1) and the volume flow or a partial volume flow in the second branch being supplied over valve assemblies (109) and/or heat emitting devices (105) to the second entry port (3.2) of the control valve assembly, and in the direction of flow behind the flow regulation devices, the partial volume flows are merged again in the connection port and still before the control device (6) within the control valve assembly.

3. The control valve assembly according to claim 1 or 2, **characterized by that** the front-side annular surface (114) and/or the wall section (14) of the sleeve with a seating surface at the second entry port (3.2) performs the valve function of the first flow regulation device (7).

4. The control valve assembly according to one of claims 1 to 3, **characterized by that** the first throttle element (12) is held at least axially indisplaceably at the spindle (10) and is disposed axially displaceably together with the spindle {10) in the connection port (5), and that the first throttle element (12) at least partially opens or closes an inlet channel (15) from the first entry port (3.1).

5. The control valve assembly according to claim 1 to 4, **characterized by that** the first throttle element (12), in a closing position, abuts a sealing seat (16) of the controller housing {2), of the connection port (5) and/or of the second entry port (3.2) and closes the inlet channel (15).

6. The control valve assembly according to claim 1 to 5, **characterized by that** a sealed guide at the surface of the first throttle element (12) adapted as a sleeve-shaped element opposite to the inner surface of a cylindrical extension of the second entry port (3.2) extending into the connection port (5) is a component of a cartridge-like assembly comprising the control and flow regulation devices.

7. The control valve assembly according to one of claims 1 to 6, **characterized by that,** with at least partially opened throttle elements (12, 13), the volume flow introduced through the first and/or the second entry port (3.1, 3.2) in the control valve assembly (1) is conducted through the interior of the throttle element (12), in particular the interior of a first throttle element (12) configured as a sleeve, and is exited through the exit port (4) from the control valve assembly (1) .

8. The control valve assembly according to one of claims 1 to 7, **characterized by that** a second end section (17) of the spindle opposite to the first end section (11) of the spindle (10), said second end section (17) axially extending into or passing through the second entry port (3.2), holds the second throttle element (1.3) of the second flow regulation device (8), which, together with the spindle (10), is axially displaceable, and that the second throttle element at least partially opens or closes an inlet channel (18) of the volume flow being connected to the second entry port.

9. The control valve assembly according to one of claims 1 to 8, **characterized by** that the second throttle element (13) is a spring-loaded valve disc penetrated by the spindle (10).

10. The control valve assembly according to one of claims 1 to 9, **characterized by that** the throttle element (13) of the second flow regulation device (8) co-operates with a peripheral projection (19) in the second entry port (3.2) as a valve seat and at least partially opens or closes the inlet channel (18).

11. The control valve assembly according to one of claims 1 to 10, **characterized by that,** in a closing position, the throttle element (13) of the second flow regulation device abuts the projection (19) and closes the inlet channel (18).

12. The control valve assembly according to one of claims 1 to 11, **characterized by that** the spindle (10) is held longitudinally displaceably in the housing (2), wherein the spindle (10) passes through the control device (6) in a sealed manner, and the control device (6) is guided longitudinally displaceably at the spindle (10).

13. The control valve assembly according to one of claims 1 to 12, **characterized by that** the spindle (10) passes through the throttle valve (13) of the second flow regulation device (8), and the throttle valve (13) is guided longitudinally displaceably at the spindle (10).

14. The control valve assembly according to one of claims 1 to 13, **characterized by that** the spindle (10) passes through the throttle valve (13) of the second flow regulation device (8), and the throttle valve (13) is held stationarily at the spindle (10) .

15. The control valve assembly according to one of claims 1 to 14, **characterized by that** the control device (6) comprises a throttle body (20) axially movable on the spindle (10) and a seat (21) therefor held in the housing (2) or in the connection port (5), wherein the throttle body (20) is limitedly movable toward the seat (21) and away therefrom, in order that the cross-section of the flow channel through the control device (6) can be changed.

16. The control valve assembly according to one of claims 1 to 15, **characterized by that** the seat (21) of the control device (6) is formed by the front surface at the cylindrical extension of the second entry port (3.2), which is disposed opposite to the throttle body (20) of the control device.

17. The control valve assembly according to one of claims 1 to 16, **characterized by that** all components guided and/or held on the spindle (10) of the control and flow regulation devices and the second entry port (3.2) form a cartridge-like assembly that can be mounted as an insert (30) from a side into the housing (2) of the control valve assembly (1).

18. The control valve assembly according to claim 17, **characterized by that** the throttle body (20) and the seat (21) form a gap (22), through which the volume flow is conducted from the connection port (5) into the exit port (4), wherein the throttle body (20) is displaceable on the spindle in the direction of the seat (21) or away therefrom depending on an acting pressure differential, and the gap (22) is opened or partially closed.

19. The control valve assembly according to claim 15 to 18, **characterized by that** the throttle body (20) is a pot or bowl-type body.

20. The control valve assembly according to one of claims 15 to 19, **characterized by that** the throttle body (20) is coupled to a membrane (23) that includes an external peripheral membrane bead (24), which abuts an inner wall (25) of the housing (2) or of the connection port (5) in a liquid-tight manner and/or is held in a sealing manner thereat.

21. The control valve assembly according to one of claims 15 to 20, **characterized by that** the throttle body (20) of the control device (6) includes a seal (26) that abuts the spindle (10) in a sealing manner.

22. The control valve assembly according to one of claims 15 to 21, **characterized by that** the pressure of the volume flow through the control valve assembly (1) acting before the first flow regulation device (7) in the first entry port (3.1) is conducted via a first pressure channel (27) formed in the housing (2) and/or in the connection port (5) into an upper chamber (36) on the bottom outside (28) of the pot-shaped throttle body (20) or the membrane (23), and that the pressure acting behind the first and the second flow regulation devices (8) and before the throttle cross-section of the control device (6) is conducted into a lower chamber (136) on the bottom inside (29) opposite to the bottom outside (28) of the pot-shaped throttle body (20), and that the throttle body (20) is axially displaceable, depending on the pressure differential, on the spindle (10), and so the gap (22) between throttle body (20) and seat (21) is more or less opened.

23. The control valve assembly according to one of claims 1 to 22, **characterized by that** the volume flow from the first entry port (3.1) to the exit port (4) is regulated via the first flow regulation device (7), and that the volume flow from the second entry port (3.2) to the exit port (4) is regulated via the second flow regulation device (8), and that the differential pressure via the first flow regulation device (7) and/or the second flow regulation device (8) including the second branch (103) disposed before the second flow regulation device via the second entry port (3.2) is held constant by the control device (6).

24. The control valve assembly according to one of claims 1 to 23, **characterized by that** either with closed second flow regulation device (8), the first flow regulation device (7) can be adjusted to a maximum value, or that with closed first flow regulation device, the second flow regulation device can be adjusted to a maximum value.

25. The control valve assembly according to one of claims 1 to 24, **characterized by that** with closed first flow regulation device (7), the second flow regulation device (8) is maximum opened.

26. The control valve assembly according to one of claims 1 to 25, **characterized by that** when opening the first flow regulation device (7), the second flow regulation device (8) is first reduced with regard to its flow, and that only when further opening the first flow regulation device (7), the second flow regulation device (8) is closed.

## Revendications

1. Robinetterie de régulation (1) pour commander la pression différentielle et/ou pour commander et régler le débit d'un circuit d'écoulement (101) opéré avec un liquide, la robinetterie de régulation comportant un boîtier (2) avec un premier embout d'entrée (3.1), à travers lequel le débit du circuit d'écoulement (101) s'écoule ou est bloqué totalement ou partiellement, avec un embout de sortie (4), à travers lequel le débit total du circuit d'écoulement est évacué, et avec un embout de raccordement (5) disposé entre le premier embout d'entrée (3.1) et l'embout de sortie (4) et parcouru par le débit total, dans cet embout de raccordement (5) un insert (30) formé d'un dispositif de régulation et de commande étant intégré, le dispositif de régulation consistant en un premier dispositif de régulation d'écoulement (7) associé au premier embout d'entrée (3.1) et un deuxième dispositif de régulation d'écoulement (8) associé, le dispositif de commande (6) maintenant constante la pression différentielle par le premier dispositif de régulation d'écoulement et donc maintenant constant le débit qui est alimenté au premier embout d'entrée, et/ou le dispositif de commande maintenant constante la pression différentielle par le deuxième dispositif de régulation d'écoulement inclusivement les ensembles robinets arrangés en amont de celui-ci avec des résistances d'écoulement (109) réglables et/ou dispositifs d'émission de chaleur (105), et l'embout de raccordement (5) ou des parties disposées à celui-ci ayant une géométrie de raccordement (9) pour un actionneur (108), au moyen duquel le premier dispositif de régulation d'écoulement et le deuxième dispositif de régulation d'écoulement du dispositif de régulation et de commande est réglable, une broche (10) disposée de manière axialement déplaçable dans l'embout de raccordement (5) de la robinetterie de régulation comportant une première partie d'extrémité (11) faisant saillie de l'embout de raccordement et étant actionnée par l'actionneur, et au moins un premier élément d'étranglement (12) attaché à la broche, ce premier élément d'étranglement (12) étant une partie du premier dispositif de régulation d'écoulement (7), et au moins un deuxième élément d'étranglement (13) étant une partie du deuxième dispositif de régulation d'écoulement, et une partie de la broche entre la première partie d'extrémité (11) et le premier élément d'étranglement (12) étant configurée de manière d'un guidage axial pour un corps d'étranglement (20) mobile du dispositif de commande (6), **caractérisée en ce que** le boîtier (2) comporte un deuxième embout d'entrée (3.2), à travers lequel le débit du circuit d'écoulement s'écoule ou est bloqué totalement ou partiellement, l'embout de raccordement (5) étant disposé entre le premier embout d'entrée (3.1) et le deuxième embout d'entrée (3.2) et l'embout de sortie (4), que le deuxième dispositif de régulation d'écoulement (8) est associé avec le deuxième embout d'entrée (3.2), que le dispositif de commande (6) maintient constante la pression différentielle sur le deuxième dispositif de régulation d'écoulement (8) comportant les ensembles robinets disposés en amont de celui-ci et ayant des résistances d'écoulement (109) et/ou des dispositifs d'émission de chaleur (105) réglables, que le deuxième dispositif de régulation d'écoulement (8) avec l'actionneur (108) est aussi réglable, que le deuxième élément d'étranglement (13) est attaché à une deuxième partie d'extrémité (17) de la broche (10) opposée à la première partie d'extrémité (11), et que le premier élément d'étranglement (12) du premier dispositif de régulation d'écoulement (7) est un manchon.

2. Robinetterie de régulation selon la revendication 1, **caractérisée en ce que** le débit total du circuit d'écoulement (101) est dirigé à travers une partie, qui, à partir d'un point de branchement (Z), est constituée par une première branche (103) et une deuxième branche (102), selon la position du premier et du deuxième dispositif de régulation d'écoulement le débit du circuit d'écoulement (101) étant dirigé en deux débits partiels à travers le premier et deuxième branches, ou le débit total étant dirigé ou bien seulement à travers la première ou bien seulement à travers la deuxième branche, le débit total ou un débit partiel dans la première branche étant alimenté au premier embout d'entrée (3.1), et le débit ou un débit partiel dans la deuxième branche étant alimenté par l'intermédiaire d'ensembles robinets (109) et/ou de dispositifs d'émission de chaleur (105) au deuxième embout d'entrée (3.2) de la robinetterie de régulation, et dans la direction d'écoulement derrière les dispositif de régulation d'écoulement, les débits partiels étant regroupés de nouveau dans l'embout de raccordement et encore devant le dispositif de commande (6) au-dedans de la robinetterie de régulation.

3. Robinetterie de régulation selon la revendication 1 ou 2, **caractérisée en ce que** la face avant annulaire (114) et/ou la zone de paroi (14) du manchon avec une face de siège au deuxième embout d'entrée (3.2) exécute la fonction de valve du premier dispositif de régulation d'écoulement (7).

4. Robinetterie de régulation selon une des revendications 1 à 3, **caractérisée en ce que** le premier élément d'étranglement (12) est maintenu au moins de manière axialement déplaçable à la broche (10) et est disposé de manière axialement déplaçable ensemble avec la broche (10) dans l'embout de raccordement (5), et que le premier élément d'étranglement (12) ouvre ou ferme au moins partiellement un canal d'entrée (15) à partir du premier embout d'entrée (3.1).

5. Robinetterie de régulation selon la revendication 1 à 4, **caractérisée en ce que** le premier élément d'étranglement (12), dans une position de fermeture, est en appui sur une siège d'étanchéité (16) du boîtier {2) du dispositif de commande, de l'embout de raccordement (5) et/ou du deuxième embout d'entrée (3.2) et ferme le canal d'entrée (15).

6. Robinetterie de régulation selon la revendication 1 à 5, **caractérisée en ce qu'**un guidage étanché à la surface du premier élément d'étranglement (12) agencé de manière d'un élément de forme de manchon opposé à la surface intérieure d'un téton cylindrique du deuxième embout d'entrée (3.2) s'étendant dans l'embout de raccordement (5) est un composant d'un ensemble de type cartouche comprenant les dispositifs de commande et de régulation d'écoulement.

7. Robinetterie de régulation selon une des revendications 1 à 6, **caractérisée en ce que,** lors d'éléments d'étranglement (12, 13) ouverts au moins partiellement, le débit introduit à travers le premier et/ou le deuxième embout d'entrée (3.1, 3.2) dans la robinetterie de régulation (1) est dirigé à travers l'intérieur de l'élément d'étranglement (12), en particulier l'intérieur d'un premier élément d'étranglement (12) configuré de manière de manchon, et est déchargé à travers l'embout de sortie (4) à partir de la robinetterie de régulation (1).

8. Robinetterie de régulation selon une des revendications 1 à 7, **caractérisée en ce qu'**une deuxième partie d'extrémité (17) de la broche opposée à la première partie d'extrémité (11) de la broche (10), cette deuxième partie d'extrémité (17) s'étendant axialement dans ou traversant le deuxième embout d'entrée (3.2), maintient le deuxième élément d'étranglement (13) du deuxième dispositif de régulation d'écoulement (8), qui, ensemble avec la broche (10), est axialement déplaçable, et que le deuxième élément d'étranglement ouvre ou ferme au moins partiellement un canal d'entrée (18) du débit étant raccordé au deuxième embout d'entrée.

9. Robinetterie de régulation selon une des revendications 1 à 8, **caractérisée en ce que** le deuxième élément d'étranglement (13) est une coupelle précontrainte par ressort et pénétrée par la broche (10).

10. Robinetterie de régulation selon une des revendications 1 à 9, **caractérisée en ce que** l'élément d'étranglement (13) du deuxième dispositif de régulation d'écoulement (8) coopère avec une saillie périphérique (19) dans le deuxième embout d'entrée (3.2) de manière d'une siège de valve et ouvre ou ferme au moins partiellement le canal d'entrée (18).

11. Robinetterie de régulation selon une des revendications 1 à 10, **caractérisée en ce que** l'élément d'étranglement (13) du deuxième dispositif de régulation d'écoulement, dans une position de fermeture, est en appui sur la saillie (19) et ferme le canal d'entrée (18).

12. Robinetterie de régulation selon une des revendications 1 à 11, **caractérisée en ce que** la broche (10) est maintenue de manière longitudinalement déplaçable dans le boîtier (2), la broche (10) traversant le dispositif de commande (6) de manière étanchée, et le dispositif de commande (6) est guidé longitudinalement de manière déplaçable à la broche (10).

13. Robinetterie de régulation selon une des revendications 1 à 12, **caractérisée en ce que** la broche (10) traverse la valve d'étranglement (13) du deuxième dispositif de régulation d'écoulement (8), et la valve d'étranglement (13) est guidée de manière longitudinalement déplaçable à la broche (10).

14. Robinetterie de régulation selon une des revendications 1 à 13, **caractérisée en ce que** la broche (10) traverse la valve d'étranglement (13) du deuxième dispositif de régulation d'écoulement (8), et la valve d'étranglement (13) est maintenue stationnairement à la broche (10).

15. Robinetterie de régulation selon une des revendications 1 à 14, **caractérisée en ce que** le dispositif de commande (6) comprend un corps d'étranglement (20) axialement mobile sur la broche (10) et une siège (21) maintenue dans le boîtier (2) ou dans l'embout de raccordement (5) pour celle-ci, le corps d'étranglement (20) étant mobile à un degré limité vers la siège (21) et à l'opposé de celle-ci, afin que la section en coupe du canal d'écoulement à travers le dispositif de commande (6) puisse être changée.

16. Robinetterie de régulation selon une des revendications 1 à 15, **caractérisée en ce que** la siège (21) du dispositif de commande (6) est constituée par la surface avant au téton cylindrique du deuxième embout d'entrée (3.2), qui est disposée en vis-à-vis du corps d'étranglement (20) du dispositif de commande.

17. Robinetterie de régulation selon une des revendications 1 à 16, **caractérisée en ce que** tous les composants guidés et/ou maintenus sur la broche (10) des dispositifs de commande et de régulation d'écoulement et le deuxième embout d'entrée (3.2) constituent un ensemble de type cartouche qui peut être monté comme insert (30) à partir d'un côté dans le boîtier (2) de la robinetterie de régulation (1).

18. Robinetterie de régulation selon la revendication 17, **caractérisée en ce que** le corps d'étranglement (20) et la siège (21) constituent un entrefer (22), à travers lequel le débit est dirigé à partir de l'embout de raccordement (5) dans l'embout de sortie (4), le corps d'étranglement (20) étant déplaçable sur la broche dans la direction de la siège (21) ou à l'opposé de celle-ci selon une pression différentielle agissante, et l'entrefer (22) est ouvert ou fermé partiellement.

19. Robinetterie de régulation selon la revendication 15 à 18, **caractérisée en ce que** le corps d'étranglement (20) est un corps de type pot ou de gamelle.

20. Robinetterie de régulation selon une des revendications 15 à 19, **caractérisée en ce que** le corps d'étranglement (20) est accouplé à une membrane (23) qui comporte un bourrelet de membrane (24) périphérique externe, qui est en appui sur une paroi intérieure (25) du boîtier (2) ou de l'embout de raccordement (5) de manière étanche aux liquides et/ou est maintenue de manière étanchée à celle-ci.

21. Robinetterie de régulation selon une des revendications 15 à 20, **caractérisée en ce que** le corps d'étranglement (20) du dispositif de commande (6) comporte un joint d'étanchéité (26) qui est en appui sur la broche (10) de manière étanchée.

22. Robinetterie de régulation selon une des revendications 15 à 21, **caractérisée en ce que** la pression du débit à travers la robinetterie de régulation (1) agissant devant le premier dispositif de régulation d'écoulement (7) dans le premier embout d'entrée (3.1) est dirigée par l'intermédiaire d'un premier canal de pression (27) constitué dans le boîtier (2) et/ou dans l'embout de raccordement (5) dans une chambre supérieure (36) sur l'extérieur du fond (28) du corps d'étranglement de type pot (20) ou la membrane (23), et que la pression agissant derrière le premier et le deuxième dispositif de régulation d'écoulement (8) et devant la section en coupe d'étranglement du dispositif de commande (6) est dirigée dans une chambre inférieure (136) sur l'intérieur du fond (29) opposé à l'extérieur du fond (28) du corps d'étranglement du type pot (20), et que le corps d'étranglement (20) est axialement déplaçable, selon la pression différentielle, sur la broche (10), et ainsi l'entrefer (22) entre le corps d'étranglement (20) et la siège (21) est ouvert plus ou moins.

23. Robinetterie de régulation selon une des revendications 1 à 22, **caractérisée en ce que** le débit à partir du premier embout d'entrée (3.1) à l'embout de sortie (4) est régulé par l'intermédiaire du premier dispositif de régulation d'écoulement (7), et que le débit à partir du deuxième embout d'entrée (3.2) à l'embout de sortie (4) est régulé par l'intermédiaire du deuxième dispositif de régulation d'écoulement (8), et que la pression différentielle par l'intermédiaire du premier dispositif de régulation d'écoulement (7) et/ou du deuxième dispositif de régulation d'écoulement (8) comportant la deuxième branche (103) disposée devant le deuxième dispositif de régulation d'écoulement par l'intermédiaire du deuxième embout d'entrée (3.2) est maintenue constante par le dispositif de commande (6).

24. Robinetterie de régulation selon une des revendications 1 à 23, **caractérisée en ce qu'**ou bien lors d'un deuxième dispositif de régulation d'écoulement (8) fermé, le premier dispositif de régulation d'écoulement (7) peut être régulé à une valeur maximale, ou bien lors d'un premier dispositif de régulation d'écoulement fermé, le deuxième dispositif de régulation d'écoulement peut être régulé à une valeur maximale.

25. Robinetterie de régulation selon une des revendications 1 à 24, **caractérisée en ce que** lors d'un premier dispositif de régulation d'écoulement (7) fermé, le deuxième dispositif de régulation d'écoulement (8) est ouvert au maximum.

26. Robinetterie de régulation selon une des revendications 1 à 25, **caractérisée en ce que** lors de l'ouverture du premier dispositif de régulation d'écoulement (7), le deuxième dispositif de régulation d'écoulement (8) est d'abord réduit en ce qui concerne son écoulement, et que seulement lors d'une ouverture continue du premier dispositif de régulation d'écoulement (7), le deuxième dispositif de régulation d'écoulement (8) est fermé.
